# EUROPÄISCHE PATENTSCHRIFT

(11) **EP 1 900 916 B1**
(45) Veröffentlichungstag und Bekanntmachung des Hinweises auf die Patenterteilung: **13.10.2010**
(21) Anmeldenummer: 07013048.9
(22) Anmeldetag: 04.07.2007
(51) Int. Cl.: F01N 3/20, F02B 37/00

(54) **Abgasnachbehandlungssystem**
Exhaust gas aftertreatment system
Système de traitement postérieur de gaz d'échappement

(30) Priorität: 16.08.2006 DE 102006038289
(43) Veröffentlichungstag der Anmeldung: 19.03.2008
(73) Patentinhaber: MAN Nutzfahrzeuge Aktiengesellschaft, 80995 München (DE)
(72) Erfinder: Döring, Andreas, 80339 München (DE)

(56) Entgegenhaltungen:
- DE-A1- 10 348 799
- US-A1- 2006 010 857

## Beschreibung

Gegenstand der Erfindung ist ein Abgasnachbehandlungssystem bei mit Luftüberschuss betriebenen Brennkraftmaschinen, wie Dieselmotoren und Benzinmotoren mit Direkteinspritzung, gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NOₓ -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt. Weiter kann der Einsatz von V₂O₅ als Aktivmaterial für den SCR-Katalysator dann Probleme aufwerfen, wenn die Abgastemperatur am SCR-Katalysator über 650°C liegt, weil V₂O₅ dann sublimiert. Aus diesem Grund werden für Hochtemperaturanwendungen V₂O₅-freie Eisen- oder Kupferzeolithe eingesetzt.

Zur Minimierung der Feinstoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist, während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feinstoffpartikel.

2 NO₂ + C ⇒ 2 NO + CO₂ (4)

2 NO₂ + C ⇒ 2NO+CO (5)

2 C + 2NO₂ ⇒ N₂ + 2CO₂ (6)

Eine weitere Möglichkeit die im Partikelabscheider oder Partikelfilter angelagerten Rußpartikel zu entfernen besteht darin, diesen in Regenerationszyklen bei hohen Temperaturen mit dem im Abgasstrom vorhandenen Sauerstoff zu Oxidieren.

C + O₂ ⇒ CO₂ (7)

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im wesentlichen vollständig verbraucht ist, also für die Umsetzung der im nachgeordneten Partikelfilter angelagerten Feinstoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert wird. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Schadstoffe die nicht mehr aus dem Abgas entfernt werden können. Zudem kann es beim Einsatz von Partikelfiltern zu einer Verstopfung der Filter durch Ölasche kommen, so dass diese in bestimmten Intervallen ausgebaut und gereinigt werden müssen.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feinstofffilter, einem Reservoir für die Reduktionsflüssigkeit, sowie einer Einspritzeinrichtung für die Reduktionsflüssigkeit, die hinter dem Feinstofffilter angeordnet ist und einem hierzu im Abgasstrom stromab angeordneten SCR-Katalysator. Die vorstehend beschriebene Anordnung erlaubt zwar eine kontinuierliche Umsetzung der im Feinstofffilter angelagerten Feinstoffpartikel vom Ruß-Typ mit Hilfe des im Oxidationskatalysator erzeugten Stickstoffdioxids, hat aber einen anderen gravierenden Nachteil. Der Partikelfilter bedingt eine Abkühlung des Abgases, so dass z. B. bei Verwendung der heute marktüblichen, mit AdBlue bezeichneten Reduktionsflüssigkeit die Abgastemperatur insbesondere nach dem Start der Brennkraftmaschine, bzw. beim Betreiben der Brennkraftmaschine im unteren Leistungsbereich zu niedrig ist um ohne den Anfall problematischer Nebenprodukte aus der 33%igen wässrigen Harnstofflösung Ammoniak zu erzeugen.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach

(NH₂)₂CO ⇒ NH₃ + HNCO (8)

erfolgt zunächst die Thermolyse, d. h. die thermische Zersetzung von Harnstoff. Anschließend erfolgt nach

HNCO + H₂O ⇒ NH₃ + CO₂ (9)

die Hydrolyse, also die katalytische Zersetzung von Isocyansäure (HNCO) in Ammoniak (NH₃) und Kohlendioxid (CO₂).

Da das Reduktionsmittel bei der Verwendung von AdBlue in einer in Wasser gelösten Form vorliegt, muss dieses Wasser vor und während der eigentlichen Thermo- und Hydrolyse verdampfen.

Sind die bei der vorstehenden Reaktion nach (8) und (9) vorliegenden Temperaturen unter 350°C bzw. wird nur langsam erhitzt, ist es aus der DE 40 38 054 A1 bekannt, dass hauptsächlich feste unschmelzbare Cyanursäure durch Trimerisierung der nach (8) gebildeten Isocyansäure gemäß

3HNCO ^{<350°C→}_{←>350°C} (HNCO)₃ (10)

entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems.

Um die Katalysatoren zu verkleinern, aber die Verweilzeit in den Katalysatoren konstant zu lassen, werden die Hydrolysekatalysatoren auch in einem Abgasteilstrom betrieben, der dem Abgasstrom entnommen und nach erfolgter Hydrolyse diesem wieder zugeführt wird. Eine entsprechende Anordnung ist der EP 1052009 A1 zu entnehmen. Besonders vorteilhaft ist es dabei, wenn die Entnahme des Abgasteilstroms möglichst motornah erfolgt, um den Hydrolysekatalysator auf einem hohen Temperaturniveau betreiben zu können. Bei abgasaufgeladenen Brennkraftmaschinen ist es weiter vorteilhaft, den Abgasteilstrom bereits vor dem Turbolader zu entnehmen und ihn stromab des Turboladers wieder zurückzuführen. Allerdings ergibt sich bei der motornahen Entnahme des Abgasteilstroms und der Zudosierung des Reduktionsmittels ein Problem. Bei bestimmten Betriebszuständen der Brennkraftmaschine, hauptsächlich im Schwachlast-, Schub-, Motorbremsbetrieb, in Leerlaufphasen oder beim Abstellen des Motors, kann eine Umkehr der Strömungsrichtung des Abgases eintreten, so dass Reduktionsmittel, aus dem Reduktionsmittel abgespaltener Ammoniak oder aus dem Reduktionsmittel gebildete Nebenprodukte, wie beispielsweise Isocyansäure (Gleichung 9), Cyanursäure (Gleichung 10) usw., durch Rückströmungen und/oder Diffusion in Richtung Motorblock, mit den abgasberührten Teilen des Motors in Berührung kommen können. Dies kann zur Korrosion der dort verbauten Materialien insbesondere der Dichtungen führen.

Aus der US 2006/010857 A1 ist weiter ein Abgasnachbehandlungssystem mit Stickoxidreduzierung bei Brennkraftmaschinen bekannt, bei dem die Stickoxidreduzierung mittels eines SCR-Katalysators erfolgt, wobei stromauf zum SCR-Katalysator ein Abgasteilstrom vom Abgasstrom abzweigt. Das Reduktionsmittels wird dabei einem Vorratsbehälter entnommen und mittels einer Zumesseinrichtung in den Abgasteilstrom zugegeben. Bei dem Reduktionsmittel handelt es sich um einen durch das heiße Abgas Ammoniak abspaltender Stoff. Der mit Ammoniak beladene Abgasteilstrom wird stromab zur Zuführstelle und stromauf zum SCR-Katalysator wieder in den Abgasstrom zurückgeführt, zur Stickoxidreduzierung ist stromab zur Rückführstelle ein SCR-Katalysator im Abgasstrom angeordnete.

Ausgehend vom vorstehend beschriebenen Stand der Technik ist es Aufgabe der Erfindung, unter Vermeidung der Nachteile bekannter Anordnungen ein Abgasnachbehandlungssystem mit Teilstromhydrolyse anzugeben, das den Rückstrom des Reduktionsmittels und/ oder des aus dem Reduktionsmittel abgespaltenen Ammoniaks und/ oder aus dem Reduktionsmittel gebildeter Nebenprodukte wie beispielsweise Isocyansäure und/ oder Cyanursäure sicher vermeidet.

Gelöst wird die Aufgabe durch ein Abgasnachbehandlungssystem gemäß dem Kennzeichen des Anspruches 1, vorteilhafte Weiterbildungen des Abgasnachbehandlungssystems sind in den abhängigen Ansprüchen gekennzeichnet.

Bei der Lösung der Aufgabe wurde davon ausgegangen, dass zur Erreichung der geforderten Abgasgrenzwerte die Stickoxidreduzierung durch einen SCR-Katalysator mit Hilfe von Ammoniak bewerkstelligt wird und die Zuführung des Ammoniaks oder eines Ammoniak abspaltenden Stoffes in einem Abgasteilstrom erfolgt, der stromauf zum SCR-Katalysator vom Abgasstrom abzweigt. Zur Zuführung des Reduktionsmittels (Ammoniak oder Ammoniak abspaltender Stoff) ist ein Vorratsbehälter für das Reduktionsmittel und eine Zumesseinrichtung für das Reduktionsmittel vorgesehen, wobei die Zumesseinrichtung das Reduktionsmittel in den Abgasteilstrom zugibt und der Abgasteilstrom stromab zur Zuführstelle und stromauf zum SCR-Katalysator in den Abgasstrom zurückgeführt ist. Der stromab zur Rückführstelle angeordnete SCR-Katalysator reduziert die im Abgasstrom enthaltenen Stickoxide mit Hilfe des abgespaltenen Ammoniaks im Wege der selektiven katalytischen Reduktion zu Stickstoff und Wasserdampf. Im Abgasteilstrom, stromauf zu der Zuführstelle für das Reduktionsmittel, befindet sich ein Oxidationskatalysator, der bei den Motorbetriebsbedingungen, bei denen eine Umkehr des Abgasstroms in Richtung Brennkraftmaschine gegeben ist, zurückströmenden Ammoniak und/ oder zurückströmende Reduktionsmittelzersetzungsprodukte oxidiert.

Das erfindungsgemäße Abgasnachbehandlungssystem erlaubt es in vorteilhafter Weise einerseits, Stickoxide aus dem Abgas zu Stickstoff und Wasser umzusetzen, andererseits wird ohne zusätzlichen, insbesondere steuerungs- oder regelungstechnischen Aufwand verhindert, dass durch den bei bestimmten Betriebsbedingungen der Brennkraftmaschine gegebenen Rückstrom von Abgasen, Ammoniak oder Reduktionsmittel oder aus dem Reduktionsmittel gebildete Nebenprodukte mit abgasberührenden Teilen der Brennkraftmaschine in Berührung kommen und diese so vor einer dadurch bedingten Korrosion geschützt sind.

Der Oxidationskatalysator lässt sich so ausbilden, dass er einerseits den zurückströmenden Ammoniak und/ oder die zurückströmenden Reduktionsmittelzersetzungsprodukte oxidiert und andererseits, bei den Motorbetriebsbedingungen, bei denen das Abgas in Normalrichtung, also von der Brennkraftmaschine weg strömt, im Abgas mitgeführtes Kohlenmonoxid und/ oder Stickstoffmonoxid und/ oder mitgeführte Kohlenwasserstoffe oxidiert. Dadurch wird in vorteilhafter Weise erreicht, dass die angesprochenen Abgasanteile im Abgasteilstrom in unschädliche Verbindungen oder in solche Verbindungen die in den nachfolgenden Reaktionen verwertbar sind, übergeführt werden. So bewirkt die Oxidation von Stickstoffmonoxid beispielsweise, dass der SCR-Reaktion im SCR-Katalysator zusätzliches reaktionsfreudigeres Stickstoffdioxid zugeführt wird.

Bei der vorstehend angesprochenen Oxidation von Ammoniak an dem stromauf zur Zuführstelle für das Reduktionsmittel angeordneten Oxidationskatalysator ist gewünscht, dass die Reaktion bis zur Oxidationstufe 0, also Stickstoff läuft.

4NH₃ +3O₂ ⇒ 2N₂+6H₂O (11)

Allerdings gelingt dies nicht immer selektiv, so dass die Oxidation oft bis zur Oxidationstufe [+1 ](Lachgas - N₂O), [+2] (Stickstoffmonoxid -NO) oder gar [+4] (Stickstoffdioxid - NO₂) weiterläuft.

2NH₃+2,5 O₂ ⇒ 2 NO + 3 H₂O [+2] (12)

2NO+O₂ ⇔ 2NO₂ [+4] (13)

NH₃ +NO₂ ⇒ 2NO+H₂O [+2] (14)

2NH₃ +2NO₂+½O₂ ⇒ 2N₂O+H₂O [+1] (15)

Um die Selektivität bezüglich Stickstoff zu erhöhen ist im Abgasteilstrom, stromab zum Oxidationskatalysator und stromauf zur Zuführstelle für das Reduktionsmittel, ein weiterer SCR-Katalysator zur selektiven Reduktion von Stickoxiden mit Hilfe von zurückströmendem Ammoniak angeordnet. Damit wird in vorteilhafter Weise erreicht, dass zurückströmender Ammoniak zuerst mit Hilfe von im Abgasteilstrom enthaltenen Stickoxiden gemäß den Gleichungen (1) und (3) zu Stickstoff oxidiert. Diese Reaktion läuft hochselektiv ab, so dass die Bildung von unerwünschten Nebenprodukten, wie Lachgas oder Stickoxide vermieden wird.

Nur wenn keine Stickoxide mehr im Abgas vorhanden sind, treffen Ammoniak und/oder Reduktionsmittelzersetzungsprodukte auf den reinen Oxidationskatalysator, der stromauf des SCR-Katalysators angeordnet ist, dort läuft dann die Reaktion bei stark reduzierter Menge an Restammoniak im wesentlichen nach der Reaktionsgleichung (11) ab.

Der Oxidationskatalysator im Abgasteilstrom und der stromab zu diesem angeordnete weitere SCR-Katalysator, lassen sich vorteilhaft zu einem Bauteil zusammenfassen, was den beanspruchten Bauraum minimiert. Von besonderem Vorteil ist es dabei, den Oxidationskatalysator im Abgasteilstrom, z.B. durch eine Beschichtung mit entsprechend aktivem Katalysatormaterial, mit einer SCR-Aktivität für Stickoxide auszustatten.

Zur Begünstigung der Abspaltung von Ammoniak aus dem Reduktionsmittel kann stromab zur Zuführstelle für das Reduktionsmittel ein Hydrolysekatalysator angeordnet sein. Weiter ist es vorteilhaft, stromab zur Zuführstelle für das Reduktionsmittel im Abgassteilstrom und/ oder im Abgasstrom wenigstens eine Abscheidvorrichtung zum Abscheiden von Partikeln aus dem Abgas anzuordnen.

Durch die Anordnung eines weiteren Oxidationskatalysators im Abgasstrom stromauf zur Rückführstelle des Abgasteilstroms, der bei normaler Strömungsrichtung des Abgases das im Abgasstrom enthaltene Stickstoffmonoxid zumindest teilweise in Stickstoffdioxid überführt, wird durch die Erhöhung des Anteils an Stickstoffdioxid einerseits die Voraussetzung geschaffen, eine nachgeordnete Abscheidvorrichtung zum Abscheiden von Partikeln aus dem Abgas in vorteilhafter Weise kontinuierlich zu regenerieren, andererseits steht für die SCR-Reaktion ebenfalls ein höherer Anteil des reaktionsfreudigeren Stickstoffdioxids zur Verfügung, was den Umsatz an Stickoxiden vorteilhaft erhöht.

Für den angesprochenen Oxidationskatalysator zur Oxidation von Ammoniak sowie den weiteren Oxidationskatalysator lassen sich vorteilhaft Platin und/oder Palladium und/oder Iridium und/oder deren Oxide und/oder IrTiOₓ und/oder Zeolithe als Aktivmaterialien einsetzen.

Bei dem im Abgasteilstrom angeordneten Oxidationskatalysator zur Oxidation von Ammoniak ist es von Vorteil, entlag der Strömungsrichtung des Abgases gesehen unterschiedliche Eigenschaften vorzusehen, derart, dass die der Zuführstelle für das Reduktionsmittel benachbarte Seite Ammoniak bevorzugt selektiv zu Stickstoff und Wasser oxidiert, während die gegenüberliegende Seite dagegen im Abgas mitgeführtes Kohlenmonoxid und/ oder Stickstoffmonoxid und/ oder mitgeführte Kohlenwasserstoffe umsatzoptimiert oxidiert. Dies lässt sich vorteilhaft dadurch erreichen, dass die der Zuführstelle für das Reduktionsmittel benachbarte Seite eine höhere Beladung mit Palladium und/ oder Iridium und/ oder Zeolithen aufweist, als die der Brennkraftmaschine zugewandte Seite. Der gleiche Effekt lässt sich dadurch erreichen, dass die der Zuführstelle für das Reduktionsmittel benachbarte Seite des Oxidationskatalysators eine niedrigere Beladung mit Platin und/ oder dessen Oxiden aufweist, als die der Brennkraftmaschine zugewandte Seite.

Als Aktivkomponenten für die SCR-Katalysatoren zur Reduktion von Stickoxiden mit Hilfe von Ammoniak kommen in vorteilhafter Weise Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe zum Einsatz. Für den Hydrolysekatalysator zur Verbesserung der Freisetzung von Ammoniak kann als Aktivkomponenten Titandioxid und/oder Siliziumdioxid und/oder Aluminiumoxid und/oder Zeolithe zur Anwendung kommen.

Bei mittels Abgasturbolader aufgeladenen Brennkraftmaschinen kann es von Vorteil sein, den Abzweig des Abgasteilstroms, in den die Reduktionsflüssigkeit eingespritzt wird, stromauf zur Turbine des Abgasturboladers anzuordnen, um für die Abspaltung des Ammoniaks ein möglichst hohes Temperaturniveau zu schaffen. Handelt es sich um eine zweiflutig gespeiste Turbine, wobei die eine Flut von wenigstens einem ersten Zylinder und die andere Flut von wenigstens einem zweiten Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich angehoben wird.

Handelt es sich um eine Brennkraftmaschine mit zwei Abgasturboladern, wobei die Turbine des einen Abgasturboladers von einer ersten Zylinderbank der Brennkraftmaschine und die Turbine des anderen Abgasturboladers von einer zweiten Zylinderbank der Brennkraftmaschine mit Abgas beschickt wird, ist es vorteilhaft, wenn der Abgasteilstrom vor der Turbine eines der beiden Abgasturbolader vom Abgasstrom abzweigt. Die Zylinder der Zylinderbank, von deren Abgastrakt der Abgasteilstroms abzweigt, können dann mit anderen Motorparametern betrieben werden, als die Zylinder der anderen Zylinderbank. Auf diese Wiese wird auch hier eine vorteilhafte Optimierung der Verhältnisse im Abgasteilstrom hinsichtlich der Aufbereitung des Reduktionsmittels möglich, indem beispielsweise die Abgastemperatur in der Startphase oder in Niedriglastbereich angehoben wird.

Zur exakten Dosierung des Reduktionsmittels kann es weiter vorteilhaft sein, im Abgasteilstrom ein Drosselelement anzuordnen, das die Raumgeschwindigkeit des Abgases und/ oder die Abgasmenge im Abzweig steuert oder regelt.

Um bei in Fahrzeuge eingebauten Brennkraftmaschinen im Schubbetrieb oder im Motorbremsbetrieb den durch den Abgasrückstrom mit Ammoniak bzw. Reduktionsmittelzersetzungsprodukten beaufschlagten Oxidationskatalysator bzw. den vorgesehenen SCR-Katalysator zu entlasten, ist es vorteilhaft, stromauf zur Zuführstelle ein Rückschlagventil anzuordnen. Alternativ oder zusätzlich kann der Einsatz eines steuerbaren, stromauf zur Zuführstelle im Abgasteilstrom angeordneten Absperrelementes, z. B. in Form einer Abgasklappe, vorteilhaft sein, das bzw. die den Abgasteilstrom im Bedarfsfall abriegelt. Eine derartige steuerbare Klappe könnte auch in vorteilhafter Weise als steuer- oder regelbares Drosselelement dienen und wäre über das ohnehin vorhandene Motorsteuergerät ansteuerbar.

Weiterhin kann es vorteilhaft sein, stromab zum SCR-Katalysator einen Katalysator zum Oxidieren von Ammoniak anzuordnen, um einen Ammoniakschlupf zu vermeiden.

Hinsichtlich der vorstehend erwähnten Oxidationskatalysatoren, die wie ausgeführt unterschiedlichen Zwecken dienen, ist es von Vorteil, diese, durch die Wahl der jeweils am besten geeigneten Aktivkomponenten, auf den jeweiligen Zweck sowie die jeweils nachfolgenden chemischen Reaktionen hin zu optimieren.

Nachdem die Abgastemperatur ebenso wie der Gehalt an Stickstoffdioxid im Abgas die Wirksamkeit des Abgasnachbehandlungssystems wesentlich mit beeinflusst, kann es von Vorteil sein, durch variieren der Motoreinstellung mittels der ohnehin vorhandenen Motorsteuereinrichtung, die Abgastemperatur bzw. den Gehalt an Stickstoffdioxid zu verändern. Insbesondere können, durch Veränderung der Motorparameter oder durch Zuführen von Kohlenwasserstoffen in den Abgasstrom vor dem Oxidationskatalysator zur Oxidation von Stickstoffmonoxid (und/ oder von Kohlenwasserstoff und/ oder von Kohlenmonoxid), die Abgastemperatur und der Stickstoffdioxidgehalt angehoben werden.

Weiter ist es vorteilhaft, mehrere der im Abgasnachbehandlungssystem enthaltenen Katalysatoren in einem Gehäuse zusammenzufassen, um die Kosten für das System und insbesondere den Platzbedarf für den Einbau in z. B. Nutzfahrzeuge zu minimieren. Partikelabscheider bzw. Partikelfilter sollten vorteilhaft so verbaut sein, dass sie auswechselbar sind.

Nachfolgend wird die Erfindung mit Hilfe der Zeichnungen anhand einiger Beispiele näher erläutert, es zeigen:
- Fig. 1: Ein Abgasnachbehandlungssystem mit Teilstromhydrolyse nach den Stand der Technik
- Fig. 2: Ein erstes Abgasnachbehandlungssystem mit Teilstromhydrolyse und Rückströmsicherung im Teilstrom
- Fig. 3: Ein zweites Abgasnachbehandlungssystem mit Teilstromhydrolyse und Rückströmsicherung im Teilstrom
- Fig. 4: Ein Abgasnachbehandlungssystem mit Teilstromhydrolyse und Rückströmsicherung im Teilstrom für Brennkraftmaschinen mit Turbolader

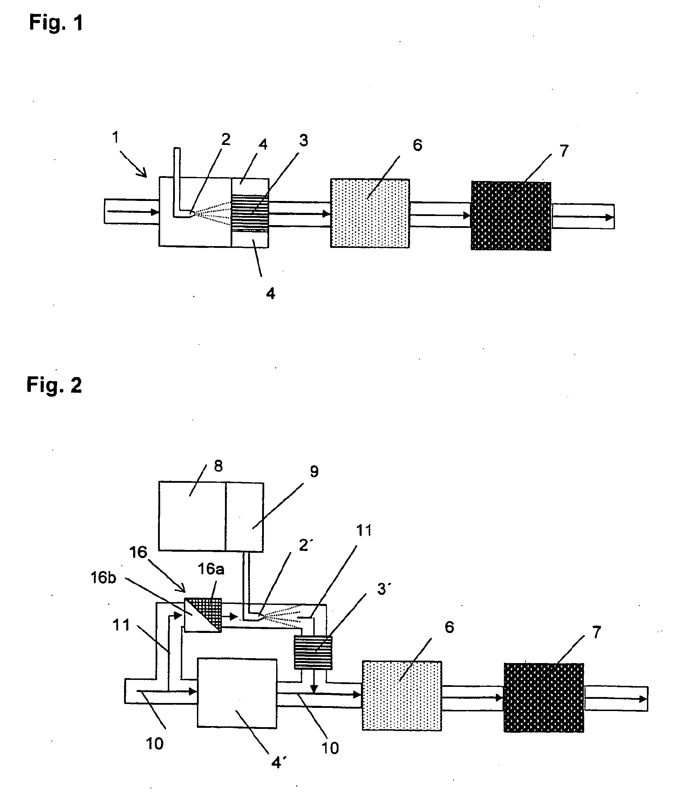

Zur Erläuterung der Zusammenhänge ist zunächst, in Fig. 1 schematisch dargestellt, eine Anordnung nach dem Stand der Technik gezeigt, mit der Stickoxide im Wege der selektiven katalytischen Reduktion aus dem Abgas einer Brennkraftmaschine entfernt werden.

Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Weiter ist es möglich als Reduktionsmittel Ammoniak zuzugeben, der an anderer Stelle, z.B. unter günstigeren thermischen Bedingungen, aus einem Ammoniak abspaltenden Stoff gewonnen wird. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung unmittelbar vor einem Hydrolysekatalysator 3 in den Abgasstrom eingesprüht wird. Die Aufgabe des Hydrolysekatalysators 3 ist es, die wässrige Harnstofflösung unter Vermeidung von Nebenprodukten möglichst vollständig in Ammoniak und Wasserdampf überzuführen. Unter bestimmten Voraussetzungen erfolgt diese Aufspaltung auch ohne Hydrolysekatalysator hinreichend, so dass dieser dann entfallen kann. Parallel zum Hydrolyse-katalysator 3 ist ein Oxidationskatalysator 4 angeordnet, dessen Aufgabe darin besteht, nach der vorstehend mit (2) bezeichneten Reaktion einen Teil des im Abgas enthaltenen Stickstoff-monoxids mittels des im Abgas vorhandenen überschüssigen Sauerstoffes zu Stickstoffdioxid aufzuoxidieren.

Die eigentliche selektive katalytische Reduktion der Stickoxide erfolgt in stromab zum Hydrolysekatalysator 3 gelegenen SCR-Katalysator 6, der einen möglichst großen Anteil der im Abgas vorhandenen Stickoxide (NOₓ) bei gleichzeitiger hoher Selektivität der Reduktion in Stickstoff und Wasserdampf überführen soll, ohne dass überschüssiger Ammoniak (NH₃) im Abgasstrom verbleibt. Bei der angesprochenen SCR-Reaktion ist das im Abgasstrom vorhandene Stickstoffdioxid reaktionsfreudiger als das im Abgas enthaltene Stickstoffmonoxid, es ist demnach wünschenswert, den Oxidationskatalysator so auszulegen, dass ein möglichst hoher Anteil an Stickstoffmonoxid in Stickstoffdioxid übergeführt wird.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann, wenn ein geringfügiger Ammoniaküberschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator 6 ein NH₃-Oxidationskatalysator 7 nachgeordnet, mit dem das überschüssige NH₃ in Stickstoff und Wasserdampf übergeführt wird. Diese Oxidationsreaktion sollte möglichst selektiv ablaufen.

Wie bereits weiter oben angedeutet, kann dann, wenn das Temperaturniveau an der Zuführstelle für das Reduktionsmittel über den gesamten Betriebsbereich hoch ist, auf den Hydrolysekatalysator 3 verzichtet werden.

Ein Ausführungsbeispiel für das erfindungsgemäße Abgasnachbehandlungssystem ist in Fig. 2 gezeigt.

Die Anordnung bedient sich ebenfalls der Teilstromhydrolyse, dazu ist vom Abgasstrom 10 ein Teilstrom 11 abgezweigt, in den das Reduktionsmittel, in diesem Beispiel wässrige Harnstofflösung (AdBlue) beigegeben wird. Die Zumessung erfolgt durch eine in Abhängigkeit von Betriebsparametern der Brennkraftmaschine gesteuerte Zumesseinrichtung 9, die die wässrige Harnstofflösung aus einem Vorratsbehälter 8 entnimmt und über eine Düse 2', je nach Betriebszustand der Brennkraftmaschine, in vorgegebenen Mengen in den Abgasstrom einspritzt. Stromab zur Zuführstelle ist ein Hydrolysekatalysator 3' im Abgasstrom angeordnet, der, wie weiter oben bereits ausgeführt, die Hydrolyse des Reduktionsmittels fördert. Die Rückführung des nunmehr mit Ammoniak beladenen Abgasteilstroms 11 erfolgt stromab zum Hydrolysekatalysator 3' und stromauf zu dem im Abgasstrom 10 angeordneten SCR-Katalysaror 6, dem ein NH₃-Oxidationskatalysator 7 nachgeordnet ist. SCR-Katalysator 6 und NH₃-Oxidationskatalysator 7 sind identisch mit den bereits in Figur 1 beschriebenen, so dass sich eine nochmalige Beschreibung ihrer Funktion erübrigt, es wird statt dessen auf die einschlägigen Beschreibungsteile zur Figur 1 verwiesen.

Wie bereits ausgeführt kann bei bestimmten Betriebszuständen der Brennkraftmaschine, hauptsächlich im Schwachlast-, Schub-, Motorbremsbetrieb, in Leerlaufphasen oder beim Abstellen des Motors, eine Umkehr der Strömungsrichtung des Abgases eintreten. Um in solchen Fällen zu verhindern dass Reduktionsmittel, aus dem Reduktionsmittel abgespaltener Ammoniak oder aus dem Reduktionsmittel gebildete Nebenprodukte, wie beispielsweise Isocyansäure (Gleichung 9), Cyanursäure (Gleichung 10) usw., durch Rückströmungen und/oder Diffusion in Richtung Motorblock, mit den abgasberührten Teilen des Motors in Berührung kommen, ist im Abgasteilstrom 11, stromauf zur Zuführstelle für das Reduktionsmittel, ein Oxidationskatalysator 16 angeordnet. Dieser ist hinsichtlich seiner Aktivkomponente so ausgelegt ist, dass er zurückströmendes Reduktionsmittel, aus dem Reduktionsmittel abgespaltenen Ammoniak oder aus dem Reduktionsmittel gebildete Nebenprodukte oxidiert. Die Auswahl der Aktivkomponenten des Oxidationskatalysators ist dabei so getroffen, dass die Oxidation von Ammoniak möglichst selektiv abläuft. Als Aktivmaterialien für den Oxidationskatalysator 16 bieten sich Platin, Palladium, Iridium, deren Oxide, IrTiOₓ und Zeolithe an, bei der Auslegung ist zu beachten, dass ein hoher Platinanteil zwar für einen möglichst hohen Umsatz förderlich ist, aber die Selektivität der Reaktion negativ beeinflusst.

In Erweiterung der Funktion des Oxidationskatalysators 16 ist dieser so ausgebildet, dass er entlag der Strömungsrichtung des Abgases gesehen unterschiedliche Eigenschaften aufweist, derart, dass die der Zuführstelle für das Reduktionsmittel benachbarte Seite 16a Ammoniak bevorzugt selektiv zu Stickstoff und Wasser oxidiert, während die gegenüberliegende Seite 16b dagegen im Abgas mitgeführtes Kohlenmonoxid und/ oder Stickstoffmonoxid und/ oder mitgeführte Kohlenwasserstoffe umsatzoptimiert oxidiert. Dies lässt sich vorteilhaft dadurch erreichen, dass die der Zuführstelle für das Reduktionsmittel benachbarte Seite 16a eine höhere Beladung mit Palladium und/ oder Iridium und/ oder Zeolithen aufweist, als die der Brennkraftmaschine zugewandte Seite 16b. Der gleiche Effekt ist dadurch erreichbar, dass die der Zuführstelle für das Reduktionsmittel benachbarte Seite 16a des Oxidationskatalysators eine niedrigere Beladung mit Platin und/ oder dessen Oxiden aufweist, als die der Brennkraftmaschine zugewandte Seite 16b.

Wie bereits ausgeführt, erfolgt die Rückführung des Abgasteilstroms 11 in den Abgasstrom 10 stromauf zum SCR-Katalysator 6. Die Rückführstelle soll dabei möglichst unmittelbar vor dem SCR-Katalysator liegen um zu vermeiden, dass mit Ammoniak beladenes Abgas im Abgasstrom 10 zurückströmt. Sollte es dennoch zu geringen Rückströmungen im Abgasstrom 10 kommen, wird der zurückströmende Ammoniak durch den parallel zum Abgasteilstrom 11 im Abgasstrom 10 angeordneten weiteren Oxidationskatalysator 4' oxidiert. Der weitere Oxidationskatalysator 4' dient der Anhebung des Anteils von Stickstoffdioxid im Abgasstrom 10, um den in der SCR-Reaktion erzielbaren Umsatz an Stickoxiden zu verbessern und ist deshalb parallel zum Abgasteilstrom 11 angeordnet, weil so das Temperaturniveau im Abgasteilstrom 11 und insbesondere an der Zuführstelle für das Reduktionsmittel nicht negativ beeinflusst wird. Dies wäre der Fall, wenn man den relativ großen weiteren Oxidationskatalysator 4' stromauf zum Abgasteilstrom 11 anordnen würde.

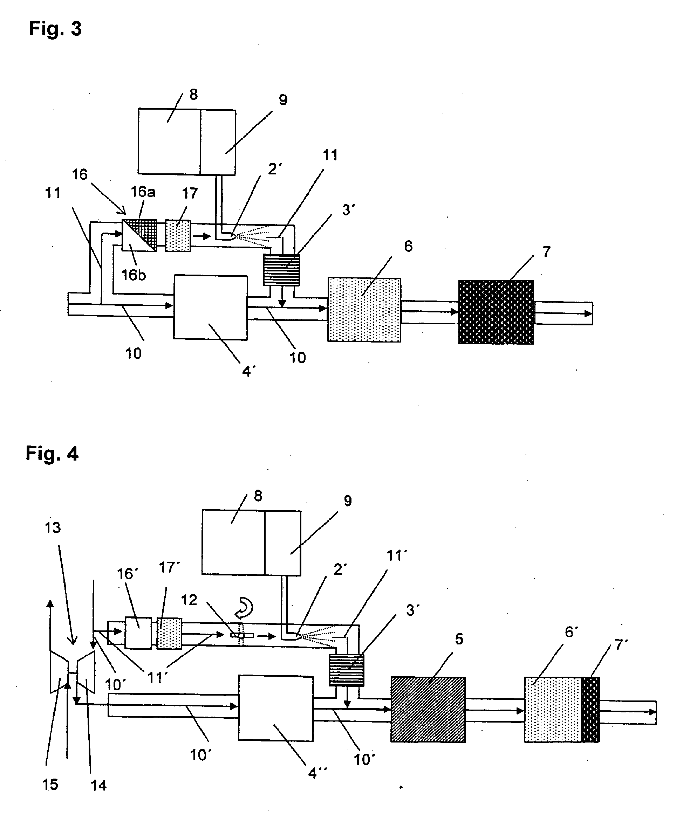

Bei der Oxidation von Ammoniak an dem stromauf zur Zuführstelle für das Reduktionsmittel angeordneten Oxidationskatalysator 16 ist angestrebt, dass die Reaktion selektiv erfolgt, also bis zur Oxidationsstufe 0 läuft (Gleichung (11)). Allerdings gelingt dies nicht immer selektiv, so dass die Oxidation oft bis zur Oxidationsstufe [+1](Lachgas - N₂O), [+2] (Stickstoffmonoxid - NO) oder gar [+4] (Stickstoffdioxid - NO₂) weiterläuft (Gleichungen (12) bis (15)), wie dies bereits oben ausgeführt ist. Für Abhilfe sorgt eine Anordnung nach Fig. 3. Die dort gezeigte Anordnung unterscheidet sich von der Anordnung nach Figur 2 lediglich dadurch, dass stromab zum Oxidationskatalysator 16 und stromauf zur Zuführungsstelle für das Reduktionsmittel im Abgasnebenstrom 11 ein weiterer SCR-Katalysator 17 angeordnet ist. Dieser führt eventuell zurückströmenden Ammoniak mit Hilfe von im Abgas enthaltenem Stickstoffmonoxid und Restsauerstoff nach Gleichung (1) bzw. mit Hilfe von Stickstoffmonoxid und Stickstoffdioxid nach Gleichung (3) hoch selektiv in Stickstoff und Wasserdampf über. Erst wenn die Stickoxide im Abgas aufgebraucht sind, erfolgt die Oxidation des Ammoniaks mit Hilfe des Oxidationskatalysators 16. Nach dem, mit Ausnahme des Vorstehenden, die Bauteile und Funktionen der Anordnung nach Figur 3 identisch mit den zu Figur 2 beschriebenen sind, wird hierzu auf die einschlägigen Beschreibungsteile zur Figur 2 verwiesen.

Bei heute in Nutzfahrzeugen betriebenen Brennkraftmaschinen ist häufig eine wenigstens einstufige Turboladeranordnung vorhanden, die mit Hilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbinen des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage, für die Hydrolyse des Reduktionsmittels ausreichende Abgastemperaturen zu erreichen. Selbst wenn Hydrolysekatalysatoren eingesetzt werden, reicht das Temperaturniveau zumeist nicht aus. Abhilfe für dieses Problem schafft die Anordnung nach Fig. 4. Wie dort gezeigt, verzweigt der von der Brennkraftmaschine (nicht dargestellt) kommende Abgasstrom bereits vor der Turbine 14 des Abgasturboladers 13 in der Weise, dass daraus ein Abgasteilstrom 11' entnommen wird, während das restliche Abgas über die Turbine 14 geführt ist, über diese den Verdichter 15 antreibt und als Abgasstrom 10' den Turbolader verlässt.

Die Hydrolyse des Reduktionsmittels erfolgt auch bei diesem Beispiel im Abgasteilstrom 11', dazu wird mit einer Dosiereinrichtung bestehend aus Vorratsbehälter 8, Zumesseinrichtung 9 und Düse 2' das Reduktionsmittel in Abhängigkeit von Betriebsparametern der Brennkraftmaschine in den Abgasteilstrom 11' zugeführt. Durch die im Abgasteilstrom 11' herrschende relativ hohe Abgastemperatur und den der Zuführstelle nachgeordneten Hydrolysekatalysator, kann das Reduktionsmittel ohne den Anfall problematischer Reaktionsprodukte wie Cyanursäure, Ammoniak abspalten.

Parallel zum Abgasteilstrom 11' wird der vom Abgasturboladers 13 kommende Abgasstrom 10' über einen Oxidationskatalysator 4' geführt, der, ebenso wie bei den vorhergehend beschriebenen Beispielen, im Abgasstrom 10' enthaltenes Stickstoffmonoxid zu Stickstoffdioxid oxidiert. Stromab zum Oxidationskatalysator 4' erfolgt die Rückführung des Abgasteilstroms 11' in den Abgasstrom 10'. Das aus dem Abgasteilstrom 11' kommende mit Ammoniak beladene Abgas und das mit Stickstoffdioxid angereicherten Abgas aus dem Abgasstrom 10' durchströmen sodann einen dem Rückführpunkt nachgeordnete Partikelabscheider 5, der einerseits für eine Durchmischung und homogene Verteilung der im Abgas enthaltenen Bestandteile sorgt und andererseits Rußpartikel aus dem Abgas anlagert, die mit Hilfe des im Oxidationskatalysatoren 4' erzeugten Stickstoffdioxids kontinuierlich zu Kohlenmonoxid, Kohlendioxid, Stickstoff und Stickstoffmonoxid umgesetzt werden. Dem Partikelabscheider ist ein SCR-Katalysator 6' nachgeordnet, der im Wege der selektiven katalytischen Reduktion die im Abgas vorhandenen Stickoxide in Stickstoff und Wasserdampf überführt. Zur Vermeidung von Ammoniakschlupf ist der SCR-Katalysator 6'in seinem stromab gelegenen Bereich mit einem einen NH₃-Oxidationskatalysator 7' ausbildenden Aktivmaterial beschichtet.

Die Vermeidung von Schäden an den abgasberührenden Teilen der Brennkraftmaschine durch bei bestimmten Betriebszuständen zurückströmendes Abgas, das mit aus dem Reduktionsmittel abgespaltenem Ammoniak bzw. bei der Abspaltung gebildeten Nebenprodukten beladen ist, erfolgt mittels einer zwischen dem Abzweig des Abgasteilstroms 11' und der Zuführstelle des Reduktionsmittels angeordneten Kombination aus einem Oxidationskatalysator 16' und einem SCR-Katalysator 17', der in der normalen durch die Pfeile angedeuteten Strömungsrichtung des Abgases gesehen, dem Oxidationskatalysator 16' nachgeordnet ist. Dabei wirkt der in der Kombination vorgesehene Oxidationskatalysator 16' in der normalen durch die Pfeile angedeuteten Strömungsrichtung des Abgases in der Weise, dass er Stickstoffmonoxid in Stickstoffdioxid umsetzt. Kommt es dagegen zu einer Umkehr der Abgasströmung, z. B. im Motorbremsbetrieb, wird der im Abgas enthaltene Ammoniak beim Durchströmen des SCR-Katalysators 17 mit Hilfe der im Abgas enthaltenen Stickoxide bzw. des Restsauerstoffes nach den Gleichungen (1) und (3) in Stickstoff und Wasserdampf übergeführt. Sind keine Stickoxide mehr im Abgas vorhanden, erfolgt die Oxidation zurückströmenden Ammoniaks im Oxidationskatalysator 16'.

Um bei länger andauernden Rückströmphasen die vorstehend angesprochen Kombination aus SCR-Katalysator 17' und Oxidationskatalysator 16' zu entlasten, ist zwischen dem SCR-Katalysator 17' und der Zuführstelle für das Reduktionsmittel ein mittels einer Motorsteuereinrichtung (nicht dargestellt) in Abhängigkeit von Betriebsparametern der Brennkraftmaschine ansteuerbares Absperrorgan 12 vorgesehen. Die Betriebsparameter der Brennkraftmaschine, bei denen eine Absperrung erfolgt, können von der Motorsteuereinheit mittels Sensoren und/ oder mittels in der Motorsteuereinheit gespeicherter Kennfelder ermittelt werden.

Das Absperrorgan 12 kann darüber hinaus in den Betriebszuständen, in denen das Abgas in der normalen Strömungsrichtung, also in der durch die Pfeile angedeuteten Richtung strömt, zur Steuerung oder Regelung des Massenstroms bzw. der Abgasmenge im Abgasteilstrom 11' herangezogen werden. Dazu erfolgt in Abhängigkeit von Betriebsparametern der Brennkraftmaschine stufenlos oder in diskreten Schritten ein Drosseln des Abgasteilstroms 11'. Die so erreichte Variierbarkeit des Abgasteilstroms erlaubt es, die für SCR-Reaktion benötigte Ammoniakkonzentration im Abgas noch genauer zu steuern.

In Abweichung zum Beispiel nach Figur 4 kann das Absperrorgan 12 natürlich auch an jeder beliebigen anderen Stelle zwischen dem Abzweig des Abgasteilstroms 11' und der Zuführstelle des Reduktionsmittels angeordnet sein. Weiter ist es denkbar, ein entsprechendes Absperrorgan auch bei den Anordnungen nach den Figuren 2 und 3 vorzusehen. In Vereinfachung der Anordnung besteht schließlich die Möglichkeit, statt des gesteuerten oder geregelten Absperrorgans 12 ein einfaches Rückschlagventil vorzusehen, das bei Strömungsumkehr in Abgasteilstrom 11' schließt.

Handelt es sich bei der Turbine 14 in Abweichung zum Beispiel nach Figur 4 um eine zweiflutig gespeiste Turbine, wobei die eine Flut von einer ersten Anzahl von Zylinder und die andere Flut von einer zweiten Anzahl von Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern (z.B. Kraftstoffeinspritzzeiten- oder mengen) betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder im Niedriglastbereich, z. B. durch eine Nacheinspritzung im Expansions- oder Ausschubtakt, angehoben wird.

Bei Brennkraftmaschinen mit zwei Zylinderbänken, die üblicherweise für jede der Zylinderbänke einen eigenen Abgasturbolader aufweisen, so dass die Turbine des einen Abgasturboladers von der einen Zylinderbank der Brennkraftmaschine und die Turbine des anderen Abgasturboladers von der anderen Zylinderbank der Brennkraftmaschine mit Abgas beschickt wird, ist es vorteilhaft, den Abgasteilstrom vor der Turbine eines der beiden Abgasturbolader vom Abgasstrom abzuzweigen. Die Zylinder der Zylinderbank von deren Abgastrakt der Abgasteilstroms abzweigt, können dann mit anderen Motorparametern (z.B. Kraftstoffeinspritzzeiten- oder mengen) betrieben werden, als die Zylinder der anderen Zylinderbank, so dass auch hier in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich, z. B. durch eine Nacheinspritzung im Expansions- oder Ausschubtakt, angehoben wird.

Hinsichtlich der in den vorstehenden Beispielen angesprochenen Katalysatoren ist anzumerken, das es sich um Vollkatalysatoren und/oder Beschichtungskatalysatoren handeln, die Aktivkomponenten der Katalysatoren können auf keramische und/oder metallische und/oder silikathaltige und/oder quarzhaltige Träger aufgebracht sein. Herstellbar sind derartige Katalysatoren mit Hilfe vieler bekannter Herstellverfahren, es wird hierzu ausdrücklich auf die einschlägige Fachliteratur verwiesen.

Für die in den vorstehenden Beispielen angesprochenen Oxidationskatalysatoren zur Oxidation von Ammoniak sowie die weiteren Oxidationskatalysatoren lassen sich Platin und/oder Palladium und/oder Iridium und/oder deren Oxide und/oder IrTiOₓ und/oder Zeolithe als Aktivmaterialien einsetzen. Als Aktivkomponenten für die SCR-Katalysatoren zur Reduktion von Stickoxiden mit Hilfe von Ammoniak kommen Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe zum Einsatz. Für den Hydrolysekatalysator zur Verbesserung der Freisetzung von Ammoniak können als Aktivkomponenten Titandioxid und/oder Siliziumdioxid und/oder Aluminiumoxid und/oder Zeolithe zur Anwendung kommen.

Zudem kann es sinnvoll sein, mehrere Katalysatoren und/oder Partikelabscheider in einem gemeinsamen Gehäuse unterzubringen, um Bauraum einzusparen und Kosten zu verringern.

Da es beim Einsatz von Partikelabscheidern oder Partikelfiltern zu einer Verstopfung der Abscheider bzw. Filter durch Ölasche kommen kann, ist es sinnvoll, die Filter so zu verbauen, dass diese auswechselbar und damit leicht zu reinigen sind.

Um das Abgasnachbehandlungssystem in seinem optimalen Betriebsbereich zu betreiben, kann die Abgastemperatur und/oder der Gehalt an Stickstoffdioxid an den Vorrichtungen zur Abscheidung von Partikeln durch Verstellen von Motorparametern und/oder durch Anheben der Kohlenwasserstoffkonzentration mit Hilfe einer Verstellung von Motorparametern, wie den Kraftstoffeinspritzzeiten- oder mengen, und/oder durch Zuführung von Kohlenwasserstoffen in den Abgasstrom stromauf der Katalysatoren zur Oxidation von Stickstoffmonoxid, die gleichzeitig die Oxidation von Kohlenwasserstoffen und/oder Kohlenmonoxid bewirken, verändert werden.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Abgasnachbehandlungssystem mit Stickoxidreduzierung bei mit Luftüberschuss betriebenen Brennkraftmaschinen, wobei die Stickoxidreduzierung mittels eines SCR-Katalysators (6, 6") erfolgt und wobei
- stromauf zum SCR-Katalysator (6, 6') ein Abgasteilstrom (11, 11') vom Abgasstrom (10, 10') abzweigt,
- ein Vorratsbehälter (8) für ein Reduktionsmittel und eine Zumesseinrichtung (9) für das Reduktionsmittel vorgesehen sind und wobei die Zumesseinrichtung (9) das Reduktionsmittel in den Abgasteilstrom (11, 11') zugibt,
- das Reduktionsmittel ein stromab der Zuführstelle durch das heiße Abgas Ammoniak abspaltender Stoff ist oder das Reduktionsmittel Ammoniak ist,
- der Abgasteilstrom (11, 11') stromab zur Zuführstelle und stromauf zum SCR-Katalysator (6, 6') in den Abgasstrom (10, 10') zurückgeführt ist,
- der stromab zur Rückführstelle angeordnete SCR-Katalysator (6, 6') die im Abgasstrom enthaltenen Stickoxide mit Hilfe des abgespaltenen Ammoniaks im Wege der selektiven katalytischen Reduktion zu Stickstoff und Wasserdampf reduziert, und **dadurch gekennzeichnet, daß** im Abgasteilstrom (11, 11') stromauf zu der Zuführstelle für das Reduktionsmittel ein Oxidationskatalysator (16, 16') angeordnet ist, der bei den Motorbetriebsbedingungen bei denen eine Umkehr des Abgasstroms in Richtung Brennkraftmaschine gegeben ist, zurückströmenden Ammoniak und/ oder zurückströmende Reduktionsmittelzersetzungsprodukte oxidiert.

2. Abgasnachbehandlungssystem nach Anspruch 1, **dadurch gekennzeichnet, dass** der Oxidationskatalysator (16, 16') so ausgebildet ist, dass er neben dem zurückströmenden Ammoniak und/ oder den zurückströmenden Reduktionsmittelzersetzungsprodukten, bei den Motorbetriebsbedingungen bei denen das Abgas von der Brennkraftmaschine weg strömt, im Abgas mitgeführtes Kohlenmonoxid und/ oder Stickstoffmonoxid und/ oder mitgeführte Kohlenwasserstoffe oxidiert.

3. Abgasnachbehandlungssystem nach einem der vorhergehenden Ansprüche, **dadurch gekennzeichnet, dass** im Abgasteilstrom (11, 11') stromab zum Oxidationskatalysator (16, 16') und stromauf zur Zuführstelle für das Reduktionsmittel ein weiterer SCR-Katalysator (17, 17') zur selektiven Reduktion von Stickoxiden mit Hilfe von zurückströmendem Ammoniak angeordnet ist.

4. Abgasnachbehandlungssystem nach einem der vorhergehenden Ansprüche, **dadurch gekennzeichnet, dass** der Oxidationskatalysator (16, 16') im Abgasteilstrom (11, 11') und der stromab zu diesem angeordnete, weitere SCR-Katalysator (17, 17') zu einem Bauteil zusammengefasst sind.

5. Abgasnachbehandlungssystem nach einem der vorhergehenden Ansprüche, **dadurch gekennzeichnet, dass** der Oxidationskatalysator zur Oxidation von Ammoniak im Abgasteilstrom gleichzeitig SCR-Aktivität für Stickoxide aufweist.

6. Abgasnachbehandlungssystem nach einem der vorhergehenden Ansprüche, **dadurch gekennzeichnet, dass** stromab zur Zuführstelle für das Reduktionsmittel ein Hydrolysekatalysator (3') angeordnet ist, der die Abspaltung von Ammoniak aus dem Reduktionsmittel begünstigt.

7. Abgasnachbehandlungssystem nach einem der vorhergehenden Ansprüche, **dadurch gekennzeichnet, dass** stromab zur Zuführstelle für das Reduktionsmittel im Abgassteilstrom und/ oder im Abgasstrom wenigstens eine Abscheidvorrichtung zum Abscheiden von Partikeln aus dem Abgas angeordnet ist.

8. Abgasnachbehandlungssystem nach einem der vorhergehenden Ansprüche, **dadurch gekennzeichnet, dass** die Abscheidvorrichtung stromauf oder stromab zum SCR-Katalysator im Abgasstrom angeordnet ist.

9. Abgasnachbehandlungssystem nach einem der vorhergehenden Ansprüche, **dadurch gekennzeichnet, dass** stromauf zur Rückführstelle des Abgasteilstroms (11, 11') in den Abgasstrom (10, 10') ein weiterer Oxidationskatalysator (4') angeordnet ist, der bei normaler Strömungsrichtung des Abgases von der Brennkraftmaschine weg, das im Abgasstrom enthaltene Stickstoffmonoxid zumindest teilweise in Stickstoffdioxid überführt.

10. Abgasnachbehandlungssystem nach einem der vorhergehenden Ansprüche, **dadurch gekennzeichnet, dass** als Aktivkomponenten für die Oxidationskatalysatoren (16,16') zur Oxidation von Ammoniak und/ oder den weiteren Oxidationskatalysator (4') Platin und/oder Palladium und/oder Iridium und/oder deren Oxide und/oder IrTiOₓ und/oder Zeolithe eingesetzt werden.

11. Abgasnachbehandlungssystem nach den Ansprüchen 2 und 10, **dadurch gekennzeichnet, dass** der Oxidationskatalysator (16, 16') zur Oxidation von Ammoniak entlag der Strömungsrichtung des Abgases gesehen unterschiedliche Eigenschaften aufweist, derart, dass die der Zuführstelle für das Reduktionsmittel benachbarte Seite Ammoniak bevorzugt selektiv zu Stickstoff und Wasser oxidiert, die gegenüberliegende Seite dagegen im Abgas mitgeführtes Kohlenmonoxid und/ oder Stickstoffmonoxid und/ oder mitgeführte Kohlenwasserstoffe umsatzoptimiert oxidiert.

12. Abgasnachbehandlungssystem nach Anspruch 11, **dadurch gekennzeichnet, dass** die der Zuführstelle für das Reduktionsmittel benachbarte Seite des Oxidationskatalysators (16) zur Oxidation von Ammoniak eine höhere Beladung mit Palladium und/ oder Iridium und/ oder Zeolithen aufweist, als die der Brennkraftmaschine zugewandte Seite.

13. Abgasnachbehandlungssystem nach Ansprüchen 11 und 12, **dadurch gekennzeichnet, dass** die der Zuführstelle für das Reduktionsmittel benachbarte Seite des Oxidationskatalysators (16) zur Oxidation von Ammoniak eine niedrigere Beladung mit Platin und/ oder dessen Oxiden aufweist, als die der Brennkraftmaschine zugewandte Seite.

14. Abgasnachbehandlungssystem nach einem der vorhergehenden Ansprüche, **dadurch gekennzeichnet, dass** die SCR-Katalysatoren (6, 6', 17, 17') zur Reduktion von Stickoxiden mit Hilfe von Ammoniak als Aktivkomponente Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthalten.

15. Abgasnachbehandlungssystem nach einem der vorhergehenden Ansprüche, **dadurch gekennzeichnet, dass** der Hydrolysekatalysator (3') zur Freisetzung von Ammoniak als Aktivkomponenten Titandioxid und/oder Siliziumdioxid und/oder Aluminiumoxid und/oder Zeolithe enthält.

16. Abgasnachbehandlungssystem nach einem der vorhergehenden Ansprüche, **dadurch gekennzeichnet, dass** im Abgasstrom (10') wenigstens eine Turbine (14) wenigstens eines Abgasturboladers (13) angeordnet ist und dass der Abzweig des Abgasteilstroms (11') in den das Reduktionsmittel zugeführt wird, stromauf zur Turbine (4) des Abgasturboladers (13) liegt.

17. Abgasnachbehandlungssystem nach Anspruch 16, **dadurch gekennzeichnet, dass** die Turbine zweiflutig gespeist wird, wobei die eine Flut von wenigstens einem ersten Zylinder und die andere Flut von wenigstens einem zweiten Zylinder mit Abgas beschickt wird und der Abgasteilstroms von einer der beiden Fluten abgezweigt.

18. Abgasnachbehandlungssystem nach Anspruch 17, **dadurch gekennzeichnet, dass** die Zylinder der Flut von der der Abgasteilstrom abzweigt mit anderen Motorparametern betriebbar sind als die Zylinder der anderen Flut.

19. Abgasnachbehandlungssystem nach Anspruch 16, **dadurch gekennzeichnet, dass** zwei Abgasturbolader vorhanden sind und dass die Turbine des einen Abgasturboladers von einer ersten Zylinderbank der Brennkraftmaschine und die Turbine des anderen Abgasturboladers von einer zweiten Zylinderbank der Brennkraftmaschine mit Abgas beschickt werden und der Abgasteilstrom vor der Turbine eines der beiden Abgasturbolader vom Abgasstrom abzweigt.

20. Abgasnachbehandlungssystem nach Anspruch 19, **dadurch gekennzeichnet, dass** die Zylinderbank von deren Abgastrakt der Abgasteilstrom abzweigt mit anderen Motorparametern betreibbar ist als die andere Zylinderbank.

21. Abgasnachbehandlungssystem nach einem der vorhergehenden Ansprüche, **dadurch gekennzeichnet, dass** im Abgasteilstrom ein Drosselelement angeordnet ist, mit dem die Raumgeschwindigkeit des Abgases und/ oder die Abgasmenge im Abzweig steuer- oder regelbar ist.

22. Abgasnachbehandlungssystem nach einem der vorhergehenden Ansprüche, **dadurch gekennzeichnet, dass** im Abgasteilstrom, stromauf zur Zuführstelle für das Reduktionsmittel, ein Rückschlagventil angeordnet ist.

23. Abgasnachbehandlungssystem nach einem der vorhergehenden Ansprüche, **dadurch gekennzeichnet, dass** im Abgasteilstrom (11'), stromauf zur Zuführstelle für das Reduktionsmittel, ein steuer- oder regelbares Absperrelement (12) angeordnet ist.

24. Abgasnachbehandlungssystem nach einem der vorhergehenden Ansprüche, **dadurch gekennzeichnet, dass** stromab zum SCR-Katalysator (6, 6') ein NH₃-Oxidationskatalysator (7, 7') angeordnet ist.

25. Abgasnachbehandlungssystem nach einem der vorhergehenden Ansprüche, **dadurch gekennzeichnet, dass** die Aktivkomponenten des Oxidationskatalysators (16, 16') zur Oxidation zurückströmenden Ammoniaks und/ oder zurückströmender Reduktionsmittelzersetzungsprodukte und die Aktivkomponenten des weiteren Oxidationskatalysators (4') unterschiedlich und jeweils auf die nachfolgenden chemischen Reaktionen optimiert sind.

26. Abgasnachbehandlungssystem nach einem der vorhergehenden Ansprüche, **dadurch gekennzeichnet, dass** die Abgastemperatur und/oder der Gehalt an Stickstoffdioxid an der Abscheidvorrichtung zum Abscheiden von Partikeln durch Verstellen von Motorparametern und/oder durch Anheben der Kohlenwasserstoffkonzentration mit Hilfe einer Verstellung von Motorparametern und/oder durch Zuführung von Kohlenwasserstoffen in den Abgasstrom stromauf zum weiteren Oxidationskatalysator veränderbar ist.

27. Abgasnachbehandlungssystem nach einem der vorhergehenden Ansprüche, **dadurch gekennzeichnet, dass** mehrere Katalysatoren und/oder Abscheidanordnungen in einem gemeinsamen Gehäuse untergebracht sind.

28. Abgasnachbehandlungssystem nach einem der vorhergehenden Ansprüche, **dadurch gekennzeichnet, dass** wenigstens eine Abscheidanordnung so verbaut ist, dass sie auswechelbar ist.

## Claims

1. An exhaust aftertreatment system with reduction of nitrogen oxides in internal combustion engines which are operated with excess air, the reduction of nitrogen oxides being effected by means of an SCR catalyst (6, 6") and
- a partial exhaust stream (11, 11') branching off from the exhaust stream (10, 10') upstream from the SCR catalyst (6, 6'),
- a storage container (8) for a reducing agent and an admetering means (9) for the reducing agent being provided, and the admetering means (9) adding the reducing agent to the partial exhaust stream (11, 11'),
- the reducing agent being a substance which splits off ammonia downstream from the supply point due to the hot exhaust, or the reducing agent being ammonia,
- the partial exhaust stream (11, 11') being returned into the exhaust stream (10, 10') downstream from the supply point and upstream from the SCR catalyst (6, 6'),
- the SCR catalyst (6, 6') arranged downstream from the return point reducing the nitrogen oxides contained in the exhaust stream to nitrogen and water vapour with the aid of the split-off ammonia by way of selective catalytic reduction, and **characterised in that** an oxidation catalyst (16, 16') is arranged in the partial exhaust stream (11,11') upstream from the point of supply for the reducing agent, which catalyst under the engine operating conditions under which a reversal of the exhaust stream in the direction of the internal combustion engine, takes place, oxidises ammonia flowing back and/or reducing-agent decomposition products flowing back.

2. An exhaust aftertreatment system according to Claim 1, **characterised in that** the oxidation catalyst (16, 16') is designed such that in addition to the ammonia flowing back and/or the reducing-agent decomposition products flowing back, under the engine operating conditions under which the exhaust flows away from the internal combustion engine, it oxidises carbon monoxide and/or nitrogen monoxide and/or hydrocarbons entrained in the exhaust.

3. An exhaust aftertreatment system according to one of the preceding claims, **characterised in that** a further SCR catalyst (17,17') for the selective reduction of nitrogen oxides with the aid of ammonia flowing back is arranged in the partial exhaust stream (11, 11'), downstream from the oxidation catalyst (16, 16') and upstream from the point of supply for the reducing agent.

4. An exhaust aftertreatment system according to one of the preceding claims, **characterised in that** the oxidation catalyst (16, 16') in the partial exhaust stream (11, 11') and the further SCR catalyst (17, 17') arranged downstream therefrom are combined to form one component.

5. An exhaust aftertreatment system according to one of the preceding claims, **characterised in that** the oxidation catalyst for the oxidation of ammonia in the partial exhaust stream simultaneously has SCR activity for nitrogen oxides.

6. An exhaust aftertreatment system according to one of the preceding claims, **characterised in that** a hydrolysis catalyst (3') is arranged downstream from the point of supply for the reducing agent, which catalyst promotes the splitting-off of ammonia from the reducing agent.

7. An exhaust aftertreatment system according to one of the preceding claims, **characterised in that** at least one separating device for separating off particles from the exhaust is arranged downstream from the point of supply for the reducing agent in the partial exhaust stream and/or in the exhaust stream.

8. An exhaust aftertreatment system according to one of the preceding claims, **characterised in that** the separating device is arranged in the exhaust stream upstream or downstream from the SCR catalyst.

9. An exhaust aftertreatment system according to one of the preceding claims, **characterised in that** a further oxidation catalyst (4') is arranged upstream from the point of return of the partial exhaust stream (11, 11') into the exhaust stream (10, 10'), which catalyst, for a normal direction of flow of the exhaust away from the internal combustion engine, converts the nitrogen monoxide contained in the exhaust stream at least partially into nitrogen dioxide.

10. An exhaust aftertreatment system according to one of the preceding claims, **characterised in that** platinum and/or palladium and/or iridium and/or their oxides and/or IrTiOₓ and/or zeolites are used as active constituents for the oxidation catalysts (16, 16') for the oxidation of ammonia and/or the further oxidation catalyst (4').

11. An exhaust aftertreatment system according to Claims 2 and 10, **characterised in that** the oxidation catalyst (16, 16') for the oxidation of ammonia, viewed along the direction of flow of the exhaust, has differing properties, such that the side adjacent to the point of supply for the reducing agent oxidises ammonia preferably selectively to form nitrogen and water, but the opposite side on the other hand oxidises carbon monoxide and/or nitrogen monoxide and/or hydrocarbons entrained in the exhaust in a manner optimised for conversion.

12. An exhaust aftertreatment system according to Claim 11, **characterised in that** the side of the oxidation catalyst (16) for the oxidation of ammonia adjacent to the point of supply for the reducing agent has higher loading watch palladium and/or iridium and/or zeolites than the side facing the internal combustion engine.

13. An exhaust aftertreatment system according to Claims 11 and 12, **characterised in that** the side of the oxidation catalyst (16) for the oxidation of ammonia adjacent to the point of supply for the reducing agent has lower loading with platinum and/or its oxides than the side facing the internal combustion engine.

14. An exhaust aftertreatment system according to one of the preceding claims, **characterised in that** the SCR catalysts (6, 6', 17, 17') for the reduction of nitrogen oxides with the aid of ammonia contain vanadium and/or vanadium pentoxide and/or titanium dioxide and/or tungsten oxide and/or copper-containing zeolites and/or iron-containing zeolites and/or cobalt-containing zeolites as active constituent.

15. An exhaust aftertreatment system according to one of the preceding claims, **characterised in that** the hydrolysis catalyst (3') for releasing ammonia contains titanium dioxide and/or silicon dioxide and/or aluminium oxide and/or zeolites as active constituents.

16. An exhaust aftertreatment system according to one of the preceding claims, **characterised in that** at least one turbine (14) of at least one exhaust turbocharger (13) is arranged in the exhaust stream (10') and that the branching-off point of the partial exhaust stream (11') into which the reducing agent is supplied lies upstream from the turbine (4) of the exhaust turbocharger (13).

17. An exhaust aftertreatment system according to Claim 16, **characterised in that** the turbine is a two-scroll one, one scroll being charged with exhaust by at least one first cylinder and the other scroll by at least one second cylinder and the partial exhaust stream branches off from one of the two scrolls.

18. An exhaust aftertreatment system according to Claim 17, **characterised in that** the cylinders of the scroll from which the partial exhaust stream branches off can be operated with different engine parameters from the cylinders of the other scroll.

19. An exhaust aftertreatment system according to Claim 16, **characterised in that** two exhaust turbochargers are present and that the turbine of one exhaust turbocharged is charged with exhaust from a first cylinder bank of the internal combustion engine and the turbine of the other exhaust turbocharger from a second cylinder bank of the internal combustion engine and the partial exhaust stream branches off from the exhaust stream before the turbine of one of the two exhaust turbochargers.

20. An exhaust aftertreatment system according to Claim 19, **characterised in that** the cylinder bank from the exhaust system of which the partial exhaust stream branches off can be operated with different engine parameters from the other cylinder bank.

21. An exhaust aftertreatment system according to one of the preceding claims, **characterised in that** a choke element is arranged in the partial exhaust stream, with which element the space velocity of the exhaust and/or the amount of exhaust in the branching-off point can be under open-loop or closed-loop control.

22. An exhaust aftertreatment system according to one of the preceding claims, **characterised in that** a non-return valve is arranged in the partial exhaust stream, upstream from the point of supply for the reducing agent.

23. An exhaust aftertreatment system according to one of the preceding claims, **characterised in that** a shut-off element (12) which can be under open-loop or closed-loop control is arranged in the partial exhaust stream (11'), upstream from the point of supply for the reducing agent.

24. An exhaust aftertreatment system according to one of the preceding claims, **characterised in that** an NH₃ oxidation catalyst (7, 7') is arranged downstream from the SCR catalyst (6, 6').

25. An exhaust aftertreatment system according to one of the preceding claims, **characterised in that** the active constituents of the oxidation catalyst (16, 16') for the oxidation of ammonia flowing back and/or reduction-medium decomposition products flowing back and the active constituents of the further oxidation catalyst (4') are different and are each optimised for the subsequent chemical reactions.

26. An exhaust aftertreatment system according to one of the preceding claims, **characterised in that** the exhaust temperature and/or the content of nitrogen dioxide at the separating device for separating off particles can be changed by adjusting engine parameters and/or by raising the hydrocarbon concentration with the aid of an adjustment of engine parameters and/or by supplying hydrocarbons into the exhaust stream upstream from the further oxidation catalyst.

27. An exhaust aftertreatment system according to one of the preceding claims, **characterised in that** a plurality of catalysts and/or particle separating arrangements are housed in a common housing.

28. An exhaust aftertreatment system according to one of the preceding claims, **characterised in that** at least one separating arrangement is constructed such that it is exchangeable.

## Revendications

1. Système de post-traitement des gaz d'échappement par réduction des oxydes d'azote dans des moteurs à combustion interne fonctionnant avec un excédent d'air,
selon lequel
la réduction des oxydes d'azote se fait à l'aide d'un catalyseur SCR (6, 6'), et
- une fraction de gaz d'échappement (11, 11') est dérivée de la veine des gaz d'échappement (10, 10') en amont du catalyseur SCR (6, 6'),
- un réservoir d'alimentation (8) contenant un agent réducteur ainsi qu'une installation de dosage (9) de l'agent réducteur sont prévus et l'installation de dosage (9) fournit l'agent réducteur dans la fraction de gaz d'échappement (11, 11'),
- l'agent réducteur est une matière qui dégage de l'ammoniac sous l'effet des gaz d'échappement chauds, en aval du point d'injection ou encore l'agent réducteur est de l'ammoniac,
- la fraction de gaz d'échappement (11, 11') est réinjectée dans la veine des gaz d'échappement (10, 10') en aval du point d'injection et en amont du catalyseur SCR (6, 6'),
- le catalyseur SCR (6, 6') installé en aval du point de réinjection, réduit les oxydes d'azote contenus dans la veine des gaz d'échappement à l'aide de l'ammoniac dégagé par réduction catalytique sélective en azote et vapeur d'eau,
**caractérisé par**
un catalyseurs d'oxydation (16, 16') installé dans la fraction de gaz d'échappement (11, 11') en amont du point d'injection de l'agent réducteur, ce catalyseur assurant l'oxydation de l'ammoniac qui circule en retour et/ou des produits de décomposition de l'agent réducteur qui circulent en retour dans le cas de conditions de fonctionnement du moteur correspondant à une inversion de la veine des gaz d'échappement en direction du moteur à combustion interne.

2. Système de post-traitement des gaz d'échappement selon la revendication 1,
**caractérisé en ce que**
le catalyseur d'oxydation (16, 16') est réalisé pour oxyder le monoxyde de carbone et/ou le monoxyde d'azote et/ou les hydrocarbures entraînés dans les gaz d'échappement en plus de l'ammoniac circulant en retour et/ou des produits de décomposition de l'agent réducteur circulant en retour dans les conditions de fonctionnement du moteur pour lesquelles les gaz d'échappement sont évacués du moteur à combustion interne.

3. Système de post-traitement des gaz d'échappement selon l'une des revendications précédentes,
**caractérisé par**
un autre catalyseur SCR (17, 17') de réduction sélective des oxydes d'azote avec de l'ammoniac circulant en retour, installé dans la fraction de gaz d'échappement (11, 11') en aval du catalyseur d'oxydation (16, 16') et amont du point d'injection de l'agent réducteur.

4. Système de post-traitement des gaz d'échappement selon l'une des revendications précédentes,
**caractérisé en ce que**
le catalyseur d'oxydation (16, 16') installé dans la fraction de gaz d'échappement (11, 11') et l'autre catalyseur SCR (17, 17') installé en aval de celui-ci sont regroupés en un seul composant.

5. Système de post-traitement des gaz d'échappement selon l'une des revendications précédentes,
**caractérisé en ce que**
le catalyseur d'oxydation pour oxyder l'ammoniac dans la fraction des gaz d'échappement, a en même temps une activité de réduction sélective SCR des oxydes d'azote.

6. Système de post-traitement des gaz d'échappement selon l'une des revendications précédentes,
**caractérisé par**
un catalyseur d'hydrolyse (3') installé en aval du point d'injection de l'agent réducteur pour favoriser le dégagement d'ammoniac à partir de l'agent réducteur.

7. Système de post-traitement des gaz d'échappement selon l'une des revendications précédentes,
**caractérisé par**
au moins un dispositif séparateur pour séparer les particules des gaz d'échappement installé en aval du point d'injection de l'agent réducteur dans la fraction de gaz d'échappement et/ou dans la veine des gaz d'échappement.

8. Système de post-traitement des gaz d'échappement selon l'une des revendications précédentes,
**caractérisé en ce que**
le dispositif séparateur est installé en amont ou en aval du catalyseur SCR dans la veine des gaz d'échappement.

9. Système de post-traitement des gaz d'échappement selon l'une des revendications précédentes,
**caractérisé par**
un autre catalyseur d'oxydation (4') installé en amont du point de réinjection de la fraction de gaz d'échappement (11, 11') dans la veine des gaz d'échappement (10, 10'), ce catalyseur d'oxydation transformant le monoxyde d'azote contenu dans la veine des gaz d'échappement, au moins en partie en dioxyde d'azote lorsque les gaz d'échappement du moteur à combustion s'écoulent dans la direction normale.

10. Système de post-traitement des gaz d'échappement selon l'une des revendications précédentes,
**caractérisé en ce que**
les composants actifs des catalyseurs d'oxydation (16, 16') pour oxyder l'ammoniac et/ou de l'autre catalyseur d'oxydation (4'), sont le platine et/ou le palladium et/ou l'iridium et/ou leurs oxydes et/ou IrTiOx et/ou des zéolithes.

11. Système de post-traitement des gaz d'échappement selon les revendications 2 et 10,
**caractérisé en ce que**
le catalyseur d'oxydation (16, 16') pour oxyder l'ammoniac, présente des propriétés différentes le long de la direction d'écoulement des gaz d'échappement de façon que le côté voisin du point d'injection de l'agent réducteur oxyde de préférence l'ammoniac de manière sélective en azote et en eau et que le côté opposé oxyde le monoxyde de carbone et/ou le monoxyde d'azote et/ou les hydrocarbures entraînés dans les gaz d'échappement d'une manière optimisée du point de vue de la conversion.

12. Système de post-traitement des gaz d'échappement selon la revendication 11,
**caractérisé en ce que**
le côté du catalyseur d'oxydation (16) pour oxyder l'ammoniac voisin du point d'injection de l'agent réducteur, comporte une charge plus importante de palladium et/ou d'iridium et/ou de zéolithes que le côté tourné vers le moteur à combustion interne de ce catalyseur.

13. Système de post-traitement des gaz d'échappement selon les revendications 11 et 12,
**caractérisé en ce que**
le côté du catalyseur d'oxydation (16) pour oxyder l'ammoniac voisin du point d'injection de l'agent réducteur, comporte une charge plus faible de platine et/ou des oxydes du platine, que le côté tourné vers le moteur à combustion interne de ce catalyseur.

14. Système de post-traitement des gaz d'échappement selon l'une des revendications précédentes,
**caractérisé en ce que**
les catalyseurs SCR (6, 6'; 17, 17') pour réduire les oxydes d'azote avec de l'ammoniac, comportent comme composants actifs du vanadium et/ou du pentoxyde de vanadium et/ou du dioxyde de titane et/ou de l'oxyde de tungstène et/ou des zéolithes contenant du cuivre et/ou des zéolithes contenant du fer et/ou des zéolithes contenant du cobalt.

15. Système de post-traitement des gaz d'échappement selon l'une des revendications précédentes,
**caractérisé en ce que**
le catalyseur d'hydrolyse (3') libérant l'ammoniac, comporte comme composants actifs du dioxyde de titane et/ou du dioxyde de silicium et/ou de l'oxyde d'aluminium et/ou des zéolithes.

16. Système de post-traitement des gaz d'échappement selon l'une des revendications précédentes,
**caractérisé par**
au moins une turbine (14) d'au moins un turbocompresseur de gaz d'échappement (13) installée dans la veine des gaz d'échappement (10') et la dérivation de la fraction de gaz d'échappement (11') qui reçoit l'agent réducteur se situe en amont de la turbine (4) du turbocompresseur de gaz d'échappement (13).

17. Système de post-traitement des gaz d'échappement selon la revendication 16,
**caractérisé en ce que**
la turbine est alimentée en double flux, un flux étant alimenté en gaz d'échappement par au moins un premier cylindre et l'autre flux par au moins un second cylindre et la fraction de gaz d'échappement est dérivée de l'un des deux flux.

18. Système de post-traitement des gaz d'échappement selon la revendication 17,
**caractérisé en ce que**
les cylindres dont on dérive la fraction de gaz d'échappement fonctionnent avec d'autres paramètres du moteur que les cylindres fournissant l'autre flux.

19. Système de post-traitement des gaz d'échappement selon la revendication 16,
**caractérisé par**
deux turbocompresseurs de gaz d'échappement et la turbine de l'un des turbocompresseurs de gaz d'échappement est alimentée en gaz d'échappement par un premier banc de cylindres du moteur à combustion interne et la turbine de l'autre turbocompresseur de gaz d'échappement est alimentée par un second banc de cylindres du moteur à combustion interne, et
la fraction de gaz d'échappement est dérivée de la veine des gaz d'échappement en amont de la turbine de l'un des deux turbocompresseurs de gaz d'échappement.

20. Système de post-traitement des gaz d'échappement selon la revendication 19,
**caractérisé en ce que**
le banc de cylindres dont on dérive une fraction de gaz d'échappement dans sa conduite de gaz d'échappement, fonctionne avec d'autres paramètres du moteur que l'autre banc de cylindres.

21. Système de post-traitement des gaz d'échappement selon l'une des revendications précédentes,
**caractérisé par**
un élément d'étranglement installé dans la fraction de gaz d'échappement et qui commande et/ou régule la vitesse de circulation des gaz d'échappement et/ou de la fraction de gaz d'échappement dans la dérivation.

22. Système de post-traitement des gaz d'échappement selon l'une des revendications précédentes,
**caractérisé par**
un clapet anti retour installé dans la fraction de gaz d'échappement en amont du point d'injection de l'agent réducteur.

23. Système de post-traitement des gaz d'échappement selon l'une des revendications précédentes,
**caractérisé par**
un élément d'arrêt commandé ou régulé (12) installé dans la fraction de gaz d'échappement (11') en amont du point d'injection de l'agent réducteur.

24. Système de post-traitement des gaz d'échappement selon l'une des revendications précédentes,
**caractérisé par**
un catalyseur d'oxydation NH₃ (7, 7') installé en aval du catalyseur SCR (6, 6').

25. Système de post-traitement des gaz d'échappement selon l'une des revendications précédentes,
**caractérisé en ce que**
les composants actifs du catalyseur d'oxydation (16, 16') pour oxyder l'ammoniac et/ou les produits de décomposition de l'agent réducteur qui circulent en retour et les composants actifs de l'autre catalyseur d'oxydation (4'), sont différents et sont respectivement optimisés en fonction des réactions chimiques en aval.

26. Système de post-traitement des gaz d'échappement selon l'une des revendications précédentes,
**caractérisé en ce qu'**
on modifie la température des gaz d'échappement et/ou la teneur en oxydes d'azote au niveau du dispositif séparateur pour séparer les particules en réglant des paramètres du moteur et/ou en augmentant la concentration en hydrocarbures par réglage de paramètres du moteur et/ou par introduction d'hydrocarbures dans la veine des gaz d'échappement en amont de l'autre catalyseur d'oxydation.

27. Système de post-traitement des gaz d'échappement selon l'une des revendications précédentes,
**caractérisé en ce que**
plusieurs catalyseurs et/ou dispositifs séparateurs sont logés dans un boîtier commun.

28. Système de post-traitement des gaz d'échappement selon l'une des revendications précédentes,
**caractérisé en ce qu'**
au moins un dispositif séparateur est installé pour pouvoir être remplacé.
